# EUROPEAN PATENT SPECIFICATION

(11) **EP 4 369 430 B1**
(45) Date of publication and mention of the grant of the patent: **06.05.2026**
(21) Application number: 23827543.2
(22) Date of filing: 22.06.2023
(51) Int. Cl.: H01M 4/13, H01M 4/70, H01M 4/04, H01M 4/139, H01M 10/04, H01M 4/02, H01M 10/0587, H01M 50/538

(54) **ELECTRODE ASSEMBLY, AND SECONDARY BATTERY, BATTERY PACK, AND VEHICLE COMPRISING ELECTRODE ASSEMBLY**
ELEKTRODENANORDNUNG UND SEKUNDÄRBATTERIE, BATTERIEPACK UND FAHRZEUG MIT DER ELEKTRODENANORDNUNG
ENSEMBLE ÉLECTRODE, ET BATTERIE SECONDAIRE, BLOC-BATTERIE ET VÉHICULE COMPRENANT UN ENSEMBLE ÉLECTRODE

(30) Priority: 22.06.2022 KR 20220076070
(43) Date of publication of application: 15.05.2024
(73) Proprietor: LG Energy Solution, Ltd., Seoul 07335 (KR)
(72) Inventor: YUN, Su Hyun, Daejeon 34122 (KR); AN, Hyo Sun, Daejeon 34122 (KR); JUNG, Bum Young, Daejeon 34122 (KR)
(74) Representative: Goddar, Heinz J.
(86) International application number: PCT/KR2023/008686
(87) International publication number: WO 2023/249434

(56) References cited:
- EP-A1- 3 392 924
- KR-A- 20090 008 060
- KR-A- 20190 027 527
- KR-A- 20190 102 784
- KR-A- 20220 037 663
- US-A1- 2010 196 755
- US-A1- 2018 062 146

## Description

### [Technical Field]

The present invention relates to an electrode assembly and a secondary battery, battery pack, and transport means including the same.

### [Background Art]

Unlike primary batteries, secondary batteries may be rechargeable and have small scales and high capacities. Recently, research and development have been actively conducted on the secondary batteries. As development of technologies and demands for mobile devices are increased, there is a rapidly increasing demand for rechargeable batteries as energy sources.

The secondary batteries are classified into coin batteries, cylindrical batteries, angular batteries, and pouch-type batteries depending on shapes of battery casings. In the secondary battery, an electrode assembly mounted in the battery casing is a power generation element that has a structure made by coating electrodes and separators and may be charged and discharged.

The electrode assemblies may be approximately classified into a Jelly-roll-type electrode assembly made by winding sheet-shaped positive and negative electrodes coated with active materials with a separator interposed therebetween, a stack-type electrode assembly made by sequentially coating a plurality of positive and negative electrodes in a state in which separators are interposed between the plurality of positive and negative electrodes, and a stack-and-folding-type electrode assembly made by winding stack-type unit cells by using long separation films.

In the related art, because an active material expands at the time of charging or discharging the secondary battery having the jelly-roll-type electrode assembly, tension is applied to an electrode non-coated portion, which causes a problem in which the electrode non-coated portion cracks.
US2018/062146 A1 disclose a stacked electrode assembly including a pair of first electrode and second electrode, each including a first current collector sheet and a first active material layer and a second current collector sheet and second active material layers attached to both surfaces of the second current collector sheet, respectively. A first tab and second tab are cut out from the same conductive sheet material as that of first current collector sheet and second current collector sheet respectively to obtain a seamless-structured integrated product. The tab is an exposed part of the conductive sheet material of the same as the current collector sheet. The tab is provided with a plurality of slits in a direction intersecting the extending direction of the tab and forms a planar first spring structure that expands and contracts in the extending direction.
EP 3 392 924 A1 disclose an electrode assembly shaped as an electrodes stack and including an anode containing an anode composite material and an anode current collector. Anode tabs protrude from the anode current collector and comprise rated brake points which can be unfolded without being torn apart.

### [Detailed Description of the Invention]

### [Technical Problem]

The present invention has been made in an effort to solve the above-mentioned problem in the related art, and an object of the present invention is to provide an electrode assembly in which contraction and expansion of a negative electrode non-coated portion, which is positioned at an outermost periphery of the electrode assembly, may accommodate a change in volume when an active material expands in volume, and a secondary battery, battery pack, and transport means including the same.

### [Technical Solution]

The present invention provides an electrode assembly, which is made by winding a positive electrode, a separator, and a negative electrode, wherein the negative electrode comprises: a negative electrode active material portion; and a negative electrode non-coated portion, wherein the negative electrode active material portion made by applying a negative electrode active material onto a negative electrode current collector; and wherein the negative electrode non-coated portion including a central negative electrode non-coated portion positioned at a winding center portion and having no negative electrode active material and an outermost peripheral negative electrode non-coated portion positioned at an outermost winding periphery, wherein a variable unit is provided on the outermost peripheral negative electrode non-coated portion and configured to adjust a length or width thereof, and wherein the variable unit comprises: one or more cutout portions having a non-straight shape; and a variable portion configured to adjust a length or width thereof.

Tthe present invention provides a secondary battery including the electrode assembly; a casing having one open side and configured to accommodate the electrode assembly; and a cap assembly coupled to the open opening portion of the casing.

The present invention provides a battery pack including the secondary battery.

The present invention provides a transport means including the battery pack.
Further embodiments are disclosed in the dependent claims.

### [Advantageous Effects]

According to the electrode assembly according to the embodiments of the present invention, the contraction and expansion of the negative electrode non-coated portion, which is positioned at the outermost periphery of the electrode assembly, may accommodate a change in volume when the active material expands in volume, thereby preventing the electrode non-coated portion from cracking.

### [Brief Description of Drawings]

FIG. 1 is a cross-sectional view illustrating a secondary battery according to an embodiment of the present invention.
FIG. 2A is a view illustrating a state in which an electrode assembly according to the embodiment of the present invention is unfolded, and FIG. 2B is a view illustrating a state in which a negative electrode and a positive electrode according to the embodiment of the present invention are unfolded.
FIG. 3 is a view illustrating a state made before a variable unit according to the embodiment of the present invention expands and a state made after the variable unit according to the embodiment of the present invention expands.
FIGS. 4A and 4B are views illustrating cutout portions according to the embodiment, and FIGS. 4C and 4D are views illustrating cutout portions according to another embodiment.
FIG. 5 is a view illustrating a variable unit according to another embodiment of the present invention.
FIG. 6 is a view illustrating a state in which a negative electrode including the variable unit according to another embodiment of the present invention is unfolded.
FIG. 7 is a view illustrating a state in which a negative electrode including a variable unit according to still another embodiment of the present invention is unfolded.
FIG. 8 is a perspective view illustrating a battery pack including the secondary battery according to the embodiment of the present invention.
FIG. 9 is a perspective view illustrating a transport means including the battery pack according to the embodiment of the present invention.

### [Explanation of Reference Numerals and Symbols]

1: Secondary battery
2: Pack housing
3: Battery pack
V: Transport means
100: Electrode assembly
10: Negative electrode
11: Negative electrode active material portion
12: Negative electrode non-coated portion
12a: Central negative electrode non-coated portion
12b: Outermost peripheral negative electrode non-coated portion
12b': First negative electrode non-coated portion
12b": Second negative electrode non-coated portion
12c: Intermediate negative electrode non-coated portion
20: Positive electrode
21: Positive electrode active material portion
22: Positive electrode non-coated portion
30: Variable unit
31: Cutout portion
31a: First cutout portion
31b: Second cutout portion
32: Variable portion
33: Fixed portion
34: Auxiliary variable portion
40: Separator
200: Casing
210: Beading portion
220: Crimping portion
300: Cap assembly
310: Top cap
320: Safety vent
330: Current blocking element
340: CID gasket
350: Sealing gasket

### [Best Mode]

The detailed description of the present invention is provided to completely explain the present invention to a person with ordinary skill in the art. Throughout the specification, unless explicitly described to the contrary, when one component "comprises (includes)" another component or "characterized by" having a certain structure and a certain shape, this means that other components, structures, and shapes may be included without being excluded.

Hereinafter, the present invention will be described in detail with reference to the drawings. However, the drawings are intended to illustratively describe the present invention, and the scope of the present invention is not limited by the drawings.

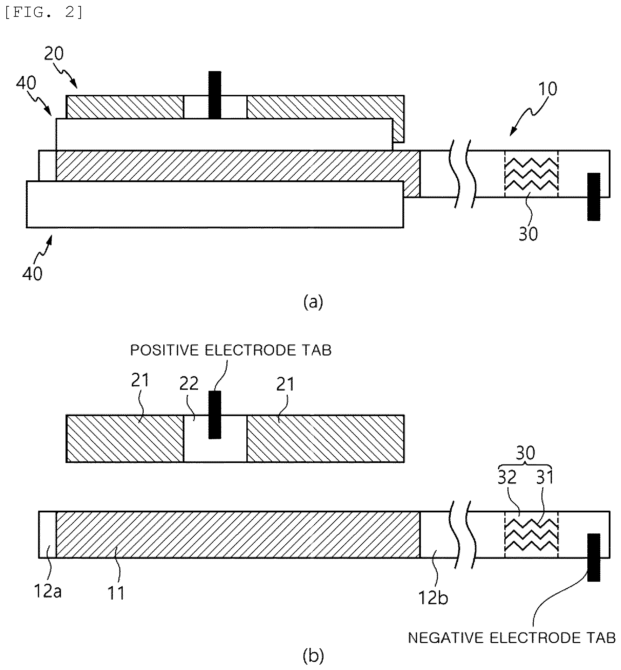

FIG. 2A is a view illustrating a state in which an electrode assembly according to the embodiment of the present invention is unfolded, and FIG. 2B is a view illustrating a state in which a negative electrode and a positive electrode according to the embodiment of the present invention are unfolded.

An electrode assembly 100 is a power generation element that may be charged and discharged and include positive electrodes 20, negative electrodes 10, and separators 40 positioned between the positive electrodes 20 and the negative electrodes 10.

The electrode assembly 100 may include a jelly-roll structure in which a first separator 40, the negative electrode 10, a second separator 40, and the positive electrode 20 are sequentially stacked and wound.

The positive electrode 20 may include a positive electrode current collector, a positive electrode active material portion 21, and a positive electrode non-coated portion 22. The positive electrode current collector may include a thin metal plate excellent in conductivity, e.g., an aluminum (Al) foil.

The positive electrode 20 is made by coating any one of or both the two opposite surfaces of the positive electrode current collector with a positive electrode active material. A region in which the positive electrode active material is applied is the positive electrode active material portion 21, and a region in which no positive electrode active material is applied is the positive electrode non-coated portion 22. Because no positive electrode active material is applied onto the positive electrode non-coated portion 22, the positive electrode non-coated portion 22 may be joined to a first electrode tab, i.e., a positive electrode tab.

The positive electrode active material may include lithium cobalt oxide having high working voltage and excellent capacity characteristics, lithium nickel oxide having high reversible capacity and used to easily implement a high-capacity battery, lithium nickel cobalt oxide made by substituting a part of nickel with cobalt, lithium nickel cobalt metal oxide made by substituting a part of nickel with manganese, cobalt, or aluminum, lithium manganese-based oxide having excellent thermal stability and made with low costs, and lithium iron phosphate having excellent stability.

The negative electrode 10 may include a negative electrode current collector, a negative electrode active material portion 11, and a negative electrode non-coated portion 12. The negative electrode current collector may include a thin metal plate excellent in conductivity, e.g., a copper (Cu) or nickel (Ni) foil.

The negative electrode 10 is made by coating one surface or two opposite surfaces of the negative electrode current collector with a negative electrode active material. The negative electrode active material portion 11 is formed by being coated with a negative electrode active material or applying the negative electrode active material. The negative electrode non-coated portion 12 is a region in which no negative electrode active material is applied or a region that is not coated with the negative electrode active material. The negative electrode non-coated portion 12 is a region in which the negative electrode current collector is exposed. Because no negative electrode active material is applied onto the negative electrode non-coated portion 12, the negative electrode non-coated portion 12 may be joined to a second electrode tab, i.e., a negative electrode tab.

For example, the negative electrode active material may be crystalline carbon, amorphous carbon, carbon composite, carbon material such as carbon fiber, lithium metal, lithium alloy, or the like. In this case, for example, the negative electrode active material may further include non-graphite-based SiO (silica), SiC (silicon carbide), or the like to design a high capacity.

The first and second electrode tabs may serve to transfer electrons, which are collected on the current collector, to an external circuit and protrude in directions in which the first and second electrode tabs face each other with respect to the electrode assembly having the jelly-roll structure.

The separator 40 may serve to prevent an internal short circuit that may be caused by contact between the positive electrode 20 and the negative electrode 10. The separator 40 may include a porous material so that ions move smoothly between the electrodes.

In the embodiment, the separator 40 may include a base layer made of a porous material. For example, the base layer may include any one selected from a group consisting of polyethylene (PE), polystyrene (PS), polypropylene (PP), and a copolymer of poly ethylene (PE) and polypropylene (PP).

In another embodiment, the separator 40 may include a safety reinforced separator (SRS). That is, the separator 40 may include the base layer made of a porous material, and a coating layer made by coating the base layer with a slurry mixture made by mixing inorganic particles and binder polymer. In particular, the coating layer has a porous structure including ceramic particles and included in a base of the separator and has a uniform porous structure formed by empty spaces (interstitial volume) between the ceramic particles which are components of the active layer.

The coating layer may include ceramic particles including at least one selected from a group consisting of alumina, silica, TiO₂, SiC, and MgAl₂O₄. The coating layer included as described above may improve the safety of the electrode assembly. Further, the coating layer may further include lithium salt.

The negative electrode 10 and the positive electrode 20 of the electrode assembly 100 according to the present invention may respectively include one or more of the negative electrode active material portion 11, the positive electrode active material portion 21, the negative electrode non-coated portion 12, and the positive electrode non-coated portion 22. For example, the number of negative electrode active material portions 11 and the number of positive electrode active material portions 21 may be determined depending on the negative electrode non-coated portion 12 and the positive electrode non-coated portion 22.

In the embodiment, the negative electrode 10 may include the negative electrode non-coated portions 12 positioned at two opposite ends of the negative electrode current collector, and the single negative electrode active material portion 11 between the negative electrode non-coated portions 12.

The positive electrode active material portion 21 may be positioned at two opposite ends of the positive electrode 20, and the positive electrode 20 may include the single positive electrode non-coated portion 22 between the positive electrode active material portions.

In this case, the negative electrode non-coated portion 12 may include a central negative electrode non-coated portion 12a positioned at a winding center portion, and an outermost peripheral negative electrode non-coated portion 12b positioned at an end opposite to the central negative electrode non-coated portion 12a, i.e., an outermost winding periphery.

Therefore, the outermost peripheral negative electrode non-coated portion 12b may be once wound around an outermost periphery of the electrode assembly 100. The electrode assembly 100 may include a precursor made by winding the positive electrode 20, the separator 40, and the negative electrode active material portion 11 before the outermost peripheral negative electrode non-coated portion 12b is wound. When a radius of the precursor is r, a length of a periphery of the precursor is 2Πr, and a length of the outermost peripheral negative electrode non-coated portion 12b may be 2Πr or more.

The positive electrode tab and the negative electrode tab may be respectively positioned on the positive electrode non-coated portion 22 and the outermost peripheral negative electrode non-coated portion 12b. The positive electrode tab and the negative electrode tab may be in contact with the positive electrode non-coated portion 22 and the negative electrode non-coated portion 12 in order to transfer electrons, which are collected on the positive electrode current collector and the negative electrode current collector, to the external circuit.

A variable unit 30 may be provided at the outermost periphery of the electrode assembly 100, i.e., on the outermost peripheral negative electrode non-coated portion 12b and adjust a length or width. The variable unit 30 may be positioned between the negative electrode tab and the negative electrode active material portion 11 and spaced apart from the negative electrode tab. In the embodiment, the negative electrode 10 may be provided in the order of the central negative electrode non-coated portion 12a, the negative electrode active material portion 11, the outermost peripheral negative electrode non-coated portion 12b', the variable unit 30, and the outermost peripheral negative electrode non-coated portion 12b" including the negative electrode tab.

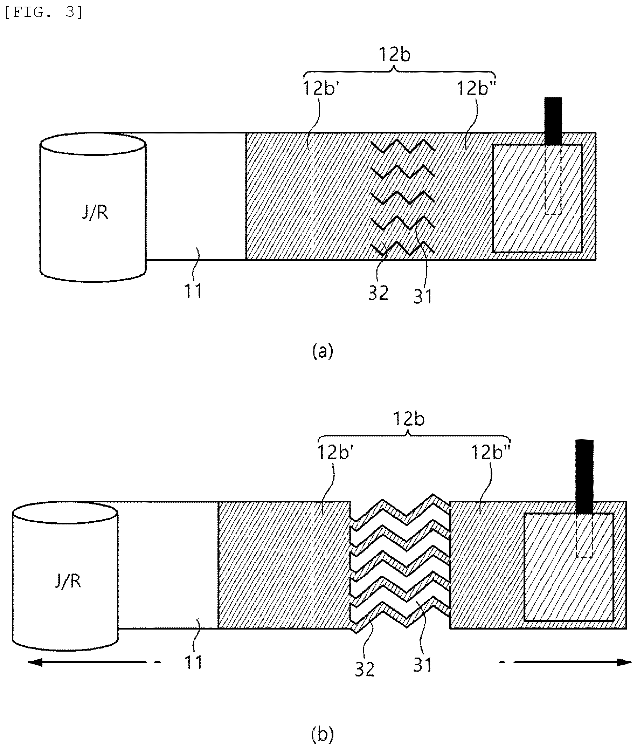

FIG. 3 is a view illustrating a state made before the variable unit 30 according to the embodiment of the present invention expands and a state made after the variable unit according to the embodiment of the present invention expands.

The variable unit 30 may include one or more cutout portions 31 each having a non-straight shape. Therefore, the variable unit 30 may include the cutout portions 31, and variable portions 32 separated from the cutout portions 31 and provided at upper and lower sides of the cutout portions 31. In this case, the upper and lower sides of the cutout portion 31 mean one side and the other side based on a width direction of the negative electrode 10, and the width direction means a direction parallel to a central axis of the electrode assembly 100.

The variable unit 30 may include a plurality of variable portions 32 and one or more cutout portions 31. For example, when n (n is an integer equal to or larger than 1) cutout portions 31 are provided, (n+1) variable portions 32 may be provided.

Further, an extension ratio of the variable unit 30 may be controlled depending on the number of cutout portions 31 and the width of the variable portion 32. For example, the extension ratio of the variable unit 30 may increase as the number of cutout portions 31 increases and the width of the variable portion 32 decreases.

One surface or two opposite surfaces of the variable portion 32 may be coated with an electrically conductive material. Therefore, when an overcurrent flows through the variable portion 32, heat is generated on one surface or two opposite surfaces of the variable portion 32 by the electrically conductive material, and the variable portion 32 is disconnected by the generated heat, which may cut off the electric current to the electrode assembly 100.

In case that the cutout portion 31 is provided as two or more cutout portions 31, i.e., a plurality of cutout portions 31, the cutout portions 31 are spaced apart from one another. All the spacing distances between the cutout portions 31 may be equal to one another, or one or more spacing distances may be different from one another. In other words, the spacing distances between the cutout portions 31 may be the width of the variable portion 32. Therefore, all the widths of the variable portions 32 may be equal to one another, or one or more widths of the variable portions 32 may be different from one another.

The cutout portion 31 may include a broken line or a cut line. The broken line means a line made by continuously cutting the variable unit along a shape of the cutout portion 31, and the cut line means a line made by non-continuously cutting the variable unit along the shape of the cutout portion 31.

The negative electrode active material portion 11 and the positive electrode active material portion 21 may be expanded or contracted when the electrode assembly 100 is charged or discharged. When the negative and positive electrode active material portions 11 and 21 expand, the electrode assembly 100 may increase in volume, and the cut line may be broken by the expansion of the electrode assembly 100 in case that the cutout portion 31 is defined by the cut line.

Further, the cutout portion 31 is spread by the expansion of the volume of the electrode assembly 100, and the variable unit 30 is stretched in a length or width direction of the outermost peripheral negative electrode non-coated portion 12b and may compensate for the increased volume of the electrode assembly 100.

When the electrode assembly 100 is contracted, the variable unit 30 may be restored to a shape made before the electrode assembly 100 is expanded. That is, because the cutout portion 31 according to the present invention is defined by the broken line or the cut line, an area of the variable unit 30 is not changed when the volume of the electrode assembly 100 is not changed, i.e., when the electrode assembly 100 is contracted before being expanded or when the electrode assembly 100 operates normally. Therefore, it is possible to prevent an increase in resistance caused by an increase in area of the variable unit 30.

The non-straight shape of the cutout portion 31 may be a zigzag shape or a wavy shape. Because the cutout portion 31 is formed in a non-straight shape, the variable unit 30 may extend obliquely from the lower side to the upper side of the negative electrode non-coated portion 12 when the area of the electrode assembly 100 is increased by the expansion of the volume of the electrode assembly 100.

Therefore, the cutout portion 31 of the variable unit 30 according to the present invention is formed in a non-straight shape and extended in an oblique direction, such that the extension ratio may be higher than that in a case in which the cutout portion 31 is formed in a straight shape and extended in the width or length direction of the negative electrode 10.

The cutout portions 31 may be provided in the length and width directions of the negative electrode non-coated portion 12 or the oblique direction that defines a predetermined angle with respect to the length and width directions. A direction in which the cutout portion 31 having a non-straight shape is provided may be a direction in which an imaginary line, which connects a start point and an end point of the cutout portion 31, is provided.

In particular, the cutout portions 31 may be provided in any one of or both the length and width directions of the negative electrode non-coated portion 12.

Further, among the plurality of cutout portions 31, at least two cutout portions 31 may be provided in the same direction. Alternatively, all the cutout portions 31 may be provided in different directions. In particular, all the cutout portions 31 may be provided in the same direction.

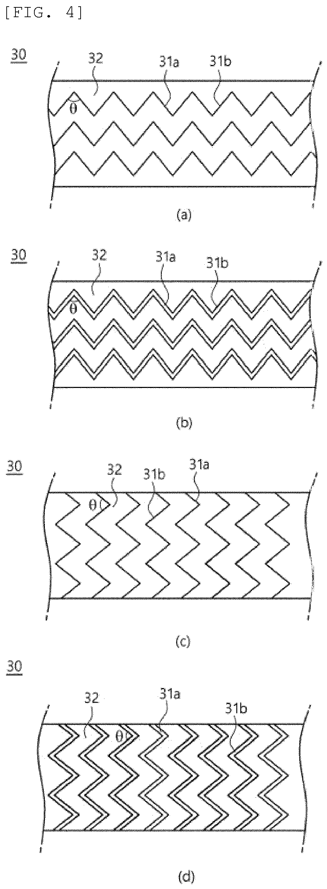

FIGS. 4A and 4B are views illustrating the cutout portions 31 according to the embodiment, and FIGS. 4C and 4D are views illustrating the cutout portions 31 according to another embodiment.

As illustrated in FIGS. 4B and 4D, the cutout portion 31 may be provided in the form of a through-hole.

The cutout portion 31 may include first cutout portions 31a provided in a first direction, and second cutout portions 31b provided in a second direction that defines an angle (θ) of less than 180 degrees with respect to the first cutout portion 31a.

In case that the cutout portion 31 has a wavy shape, the cutout portion 31 may have a first shape convex upward, and a second shape concave downward. The first direction, in which the first cutout portion 31a is formed in the first shape, may be a direction of any tangential line to the cutout portion 31 positioned at the left side based on a maximum point of the first shape in the direction in which the negative electrode active material portion 11 is positioned. The second direction, in which the second cutout portion 31b is formed, may be a direction of any tangential line to the cutout portion 31 positioned at the right side based on the maximum point.

Further, in the second shape, reference points of the first and second cutout portions 31a and 31b are minimum points. In this case, the maximum point and the minimum point mean points at which an angle between the tangential line and the length direction of the negative electrode 10 is 0 degree.

The cutout portion 31 may include one or more first cutout portions 31a and one or more second cutout portions 31b, and the one or more first cutout portions 31a and the one or more second cutout portions 31b may be connected to one another.

The cutout portion 31 according to the embodiment may be provided such that the one or more first cutout portions 31a and the one or more second cutout portions 31b are connected to one another in the winding direction of the electrode assembly 100, i.e., the length direction of the negative electrode 10.

The cutout portion 31 according to another embodiment may be provided such that the one or more first cutout portions 31a and the one or more second cutout portions 31b are connected to one another in a direction perpendicular to the winding direction of the electrode assembly 100, i.e., the width direction of the negative electrode 10.

The first cutout portion 31a and the second cutout portion 31b may define an acute or obtuse angle. In particular, an angle defined between the first cutout portion 31a and the second cutout portion 31b may be 30 to 150 degrees, and more particularly, 60 to 120 degrees.

The extension ratio of the variable unit 30 may increase as the angle defined between the first cutout portion 31a and the second cutout portion 31b according to the embodiment decreases or an interior angle of the cutout portion 31 according to another embodiment decreases.

A length of the variable unit 30 may be 0.5 to 1.5 cm. In particular, the length of the variable unit 30 may be 0.8 to 1.2 cm. The variable unit 30 may have an extension ratio of 5 to 45% based on an overall length of the variable unit 30. In particular, the variable unit 30 may have an extension ratio of 22 to 35%.

When the length and extension ratio of the variable unit 30 satisfy the range, the variable unit 30 may accommodate a change in volume of the electrode assembly 100 when the electrode assembly 100 maximally expands. Therefore, a crack is not formed by the expansion of the negative electrode non-coated portion 12.

Further, the variable portion 32 may be made of the same material as the negative electrode current collector.

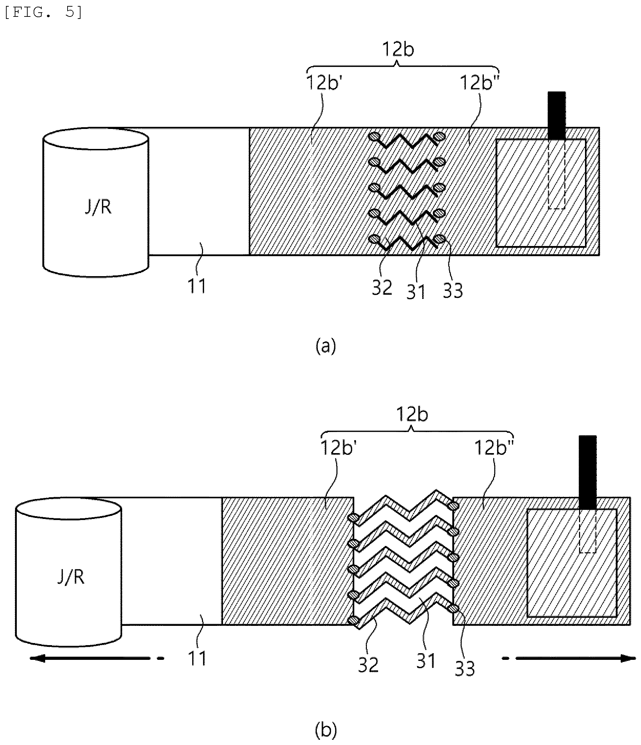

FIG. 5 is a view illustrating the variable unit 30 according to another embodiment of the present invention. The variable unit 30 may further include fixed portions 33.

The fixed portions 33 may be positioned at two opposite ends of the variable portion 32 and connect the variable portion 32 and the outermost peripheral negative electrode non-coated portion 12b. At least a part of the fixed portion 33 may be bonded to the outermost peripheral negative electrode non-coated portion 12b, and the remaining part of the fixed portion 33 may be bonded to the variable portion 32.

In more detail, the outermost peripheral negative electrode non-coated portion 12b may include first negative electrode non-coated portion 12b' and a second negative electrode non-coated portion 12b". The variable unit 30 may be positioned between the first negative electrode non-coated portion 12b' and the second negative electrode non-coated portion 12b". Further, at least a part of the fixed portion 33 may be bonded to the first negative electrode non-coated portion 12b' or the second negative electrode non-coated portion 12b", and the remaining part of the fixed portion 33 may be bonded to the variable portion 32.

The fixed portion 33 may be made of the same material as the negative electrode current collector or made of an electrically conductive material.

In case that the electrode assembly 100 expands in volume to a length equal to or longer than a maximum extension length of the variable portion 32, the fixed portion 33 may prevent damage to the negative electrode tab by preventing the outermost peripheral negative electrode non-coated portion 12b from cracking in a direction from the variable portion 32 to the negative electrode tab.

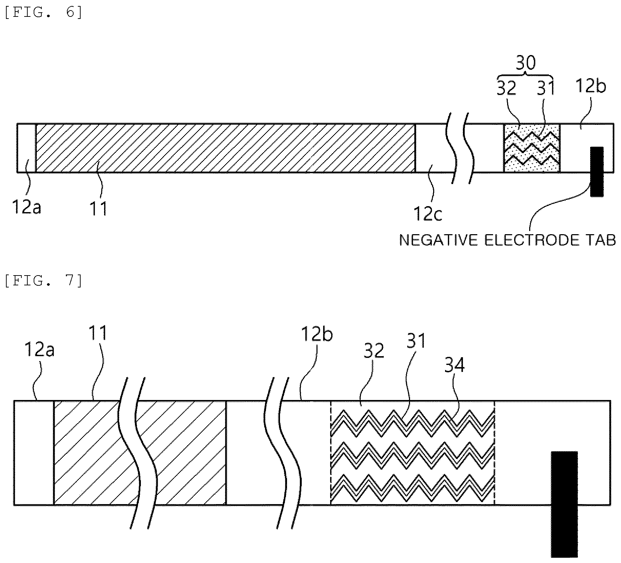

FIG. 6 is a view illustrating a state in which the negative electrode 10 including the variable unit 30 according to still another embodiment of the present invention is unfolded.

The negative electrode according to the present invention may include the central negative electrode non-coated portion 12a positioned at one end and the winding center portion of the negative electrode active material portion 11, an intermediate negative electrode non-coated portion 12c positioned at the other end of the negative electrode active material portion 11, and the outermost peripheral negative electrode non-coated portion 12b positioned at one end of the intermediate negative electrode non-coated portion 12c. The variable unit 30 may be positioned between the outermost peripheral negative electrode non-coated portion 12b and the intermediate negative electrode non-coated portion 12c. One end of the variable unit 30 is bonded to the outermost peripheral negative electrode non-coated portion 12b, and the other end of the variable unit 30 is bonded to the intermediate negative electrode non-coated portion 12c, such that the variable unit 30 may connect the outermost peripheral negative electrode non-coated portion 12b and the intermediate negative electrode non-coated portion 12c.

In this case, one end of the variable unit 30 and the outermost peripheral negative electrode non-coated portion 12b may be bonded and connected to each other by an adhesive tape. The other end of the variable unit 30 and the intermediate negative electrode non-coated portion 12c may be bonded and connected to each other by an adhesive tape. The adhesive tape may include electrical conductivity.

The adhesive tape may include a base (not illustrated), and a bonding agent layer (not illustrated) provided on any one of or both one surface and the other surface of the base. The base may include any one or more of polyurethane, polyethylene terephthalate, polyester, and polyimide. Further, the bonding agent layer may include an acrylic-based bonding agent.

The variable portion 32 may include an electrically conductive material. For example, the variable portion 32 may include lead (Pb), cadmium (Cd), mercury (Hg), hexavalent chromium (Cr⁶⁺), polybrominated biphenyl (PBBs), or polybrominated diphenyl ether (PBDEs).

Because the variable unit 30 according to still another embodiment includes the above-mentioned material, the circuit, in which electrons are moved when the variable portion 32 is disconnected by heat generated therein as a large amount of electric current flows through the electrode assembly 100, may be blocked. Therefore, it is possible to prevent the electrode assembly 100 from being overheated.

FIG. 7 is a view illustrating a state in which the negative electrode including the variable unit 30 according to still another embodiment of the present invention is unfolded.

The variable unit 30 according to still another embodiment is in a state in which the variable unit 30 according to the embodiment and the variable unit 30 according to another embodiment are combined. In this case, the cutout portion 31 of the variable unit 30 may include a through-hole shape.

The variable unit 30 including the cutout portions 31 and the variable portions 32 may further include auxiliary variable portions 34 disposed between the cutout portions 31. The auxiliary variable portion 34 may have a shape corresponding to the shape of the cutout portion 31 and positioned between the cutout portions 31 each having a through-hole shape. Further, the auxiliary variable portion 34 may include an electrically conductive material. Therefore, when an overcurrent flows through the auxiliary variable portions 34, all the auxiliary variable portions 34 and the variable portions 32 are disconnected by the heat generated from the auxiliary variable portions 34, which may cut off the electric current.

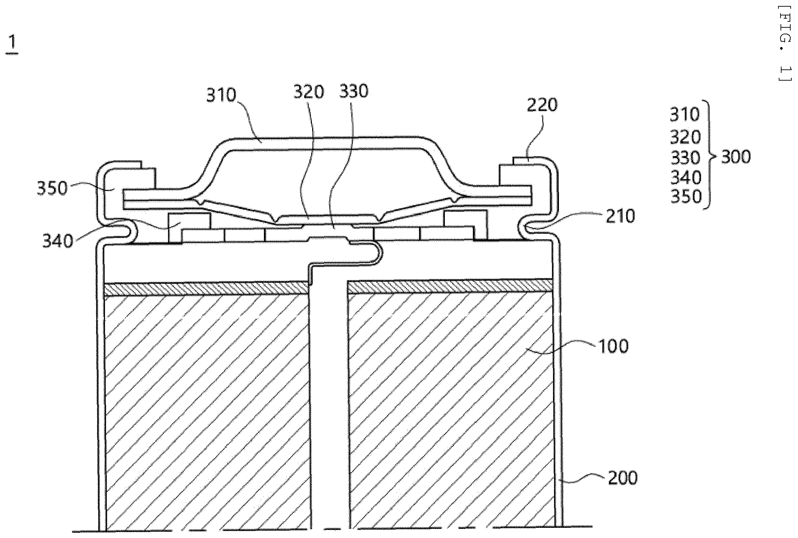

FIG. 1 is a cross-sectional view illustrating a secondary battery 1 according to the embodiment of the present invention. The secondary battery 1 according to the present invention may include the electrode assembly 100, a casing 200, and a cap assembly 300.

The description of the electrode assembly 100 may be replaced with the description of the above-mentioned electrode assembly 100.

The casing 200 may have a column structure having a space therein. The internal space of the casing 200 may accommodate an electrolyte and the electrode assembly 100 including the electrodes and the separator. The casing 200 may have one side having an open structure, and the other side having a sealed structure. In this case, one side and the other side of the casing 200 may mean ends positioned on the upper and lower portions in the gravitational direction or along the central axis of the casing 200.

A beading portion 210 may be provided at one opened side of the casing 200 and folded in a direction toward a center of the secondary battery 1. Further, the casing 200 may have a crimping portion 220 provided above the beading portion 210. That is, the crimping portion 220 may be positioned at an uppermost side of the casing 200.

The casing 200 may be made of a lightweight conductive metallic material such as aluminum or aluminum alloy.

The cap assembly 300 may be coupled to an upper end of an opening portion of the casing 200 and include a top cap 310, a safety vent 320, a current blocking element 330, a CID gasket 340, and a sealing gasket 350.

The embodiment of the present invention provides a battery pack including the secondary battery.

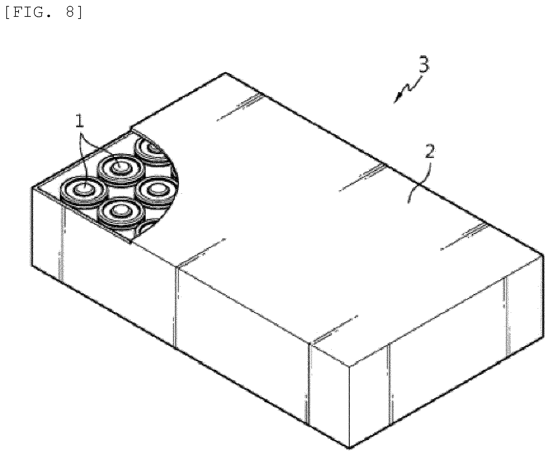

FIG. 8 related to the embodiment illustrates a battery pack 3 including the secondary battery 1 provided in a pack housing 2.

The battery pack according to the embodiment has a high output and a large capacity.

The embodiment of the present invention provides a transport means including the above-mentioned battery pack.

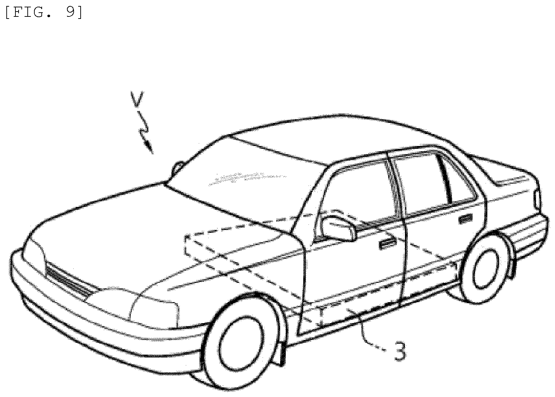

In the embodiment, FIG. 9 illustrates a transport means V including the battery pack 3.

The transport means according to the embodiment is excellent in stability and safety because the transport means uses the battery pack having a high output and a large capacity.

A method of manufacturing an electrode assembly includes step S10 of manufacturing the positive electrode, step S20 of manufacturing the negative electrode, step S30 of manufacturing the variable portion, and step S40 of winding the positive electrode and the negative electrode.

In step S10 of manufacturing the positive electrode, the positive electrode active material portion and the positive electrode non-coated portion may be formed by applying the positive electrode active material onto the positive electrode current collector. The positive electrode active material portion and the positive electrode non-coated portion may be formed on one surface or two opposite surfaces of the positive electrode current collector.

In step S20 of manufacturing the negative electrode, the negative electrode active material portion and the negative electrode non-coated portion may be formed by applying the negative electrode active material onto the negative electrode current collector. The negative electrode active material portion and the negative electrode non-coated portion may be formed on one surface or two opposite surfaces of the negative electrode current collector.

In step S30 of manufacturing the variable portion, the variable portion may be manufactured by forming the cutout portion in the negative electrode non-coated portion. The variable portion may be formed by notching or blanking the negative electrode non-coated portion.

In step S40 of winding the positive electrode and the negative electrode, the electrode assembly may be manufactured by winding the positive electrode, the separator, and the negative electrode.

One end of the positive electrode, one end of the separator, and one end of the negative electrode are fixed to a winding rewinder, and the positive electrode, the separator, and the negative electrode may be wound as the winding rewinder rotates.

The positive electrode and the negative electrode may be wound around a winder after the positive electrode active material and the negative electrode active material are respectively applied onto the positive electrode current collector and the negative electrode current collector. The positive electrode and the negative electrode may be supplied to the winding rewinder while being unwound from the winder.

Further, the electrolyte may be sprayed while the positive electrode and the negative electrode are supplied from the winder to the winding rewinder.

While the present invention has been described above with reference to the exemplary embodiments, it may be understood by those skilled in the art that the present invention may be variously modified and changed without departing from the spirit and scope of the present invention disclosed in the claims.

### [Mode for Invention]

### Example

Cycles were performed by using 18650 cells (a diameter was about 18 mm, a height was about 65 mm, and a ratio of form factor was 0.277) including the electrode assembly made by winding the positive electrode, the separator, and the negative electrode.

The cycle condition was a constant current/constant voltage (CC-CV) manner. Under 4.30 V and 1 C condition, the charging process was performed in a way that the charging was cut off when the electric current reached 5%, and one-hour rest was performed. Further, the discharging process was performed under a 3.0 V and 1 C condition in a constant current (CC) manner, and then one-hour rest was performed.

In this case, the negative electrode includes the variable unit having three zigzag-shaped cut lines. The zigzag shape includes the first cut line cut in the first direction, and the second cut line cut in the second direction, and an angle defined between the first cut line and the second cut line is 90°.

### Comparative Example 1

A secondary battery was charged and discharged in the same way as the example, except that an angle defined between the first cut line and the second cut line is 10°.

### Comparative Example 2

A secondary battery was charged and discharged in the same way as the example, except that an angle defined between the first cut line and the second cut line is 170°.

### Experimental Example. Measurement of whether disconnection occurs in accordance with angle of cutout portion

The disconnection of the variable unit, i.e., the variable portion was measured while the cycle was performed when one cycle included charging and discharging.

**[Table 1]**

| | Angle (θ) | Number of times of cycles | Whether disconnection occurs |
|---|---|---|---|
| Comparative Example 1 | 10° | 18 times | Disconnection occurs |
| Comparative Example 2 | 170° | 24 times | Disconnection occurs |
| Example | 90° | 40 times | No disconnection occurs |

With reference to Table 1, it can be seen that in the case of Comparative Examples 1 and 2, cracks occur because an angle defined between the first and second cutout portions is small or large, and the first and second cutout portions cannot accommodate the expansion in volume of the electrode assembly when the electrode assembly is charged and discharged.

In contrast, according to the example, it can be seen that the variable unit accommodates the expansion in volume of the electrode assembly, and the variable unit is not disconnected even though the cycle is repeated 40 times.

## Claims

1. An electrode assembly (100), which is made by winding a positive electrode (20), a separator (40), and a negative electrode (10), wherein the negative electrode (10) comprises:
a negative electrode active material portion (11); and a negative electrode non-coated portion (12),
wherein the negative electrode active material portion (11) made by applying a negative electrode active material onto a negative electrode current collector; and
wherein the negative electrode non-coated portion (12) including a central negative electrode non-coated portion (12a) positioned at a winding center portion and having no negative electrode active material and an outermost peripheral negative electrode non-coated portion (12b) positioned at an outermost winding periphery,
wherein a variable unit (30) is provided on the outermost peripheral negative electrode non-coated portion (12) and configured to adjust a length or width thereof, and
wherein the variable unit (30) comprises:
one or more cutout portions (31) having a non-straight shape; and
a variable portion (32) configured to adjust a length or width thereof.

2. The electrode assembly (100) of claim 1, wherein the cutout portion (31) is provided in the form of a cut line or a cut groove.

3. The electrode assembly (100) of claim 2, wherein the cut line includes a broken line or a cut line.

4. The electrode assembly (100) of claim 1, wherein the non-straight shape has a zigzag shape or a wavy shape.

5. The electrode assembly (100) of claim 1, wherein the cutout portion (31) is provided in any one of or both length and width directions of the negative electrode non-coated portion (12).

6. The electrode assembly (100) of claim 1, wherein the negative electrode non-coated portions (12) are positioned at front and rear ends based on a length direction of the variable unit (30), and the electrode assembly (100) further includes one or more fixed portions (33) fixed to a boundary line between the variable unit (30) and the negative electrode non-coated portion (12).

7. The electrode assembly (100) of claim 1, wherein the variable portion (32) includes the same material as the negative electrode current collector.

8. The electrode assembly (100) of claim 1, wherein the outermost peripheral negative electrode non-coated portion (12) includes a negative electrode non-coated portion (12b') and a second negative electrode non-coated portion (12b"), and the variable unit is positioned between the first negative electrode non-coated portion (12b') and the second negative electrode non-coated portion (12b").

9. The electrode assembly (100) of claim 1, wherein one surface or two opposite surfaces of the variable portion (32) are coated with an electrically conductive material.

10. The electrode assembly (100) of claim 1, wherein the cutout portion (31) is provided as one or two or more cutout portions (31).

11. The electrode assembly (100) of claim 10, wherein the two or more cutout portions (31) are provided, and at least two cutout portions (31) are provided in the same direction.

12. The electrode assembly (100) of claim 10, wherein the two or more cutout portions (31) are provided, and all the cutout portions (31)e provided in different directions.

13. A secondary battery (1) comprising:
the electrode assembly (100) according to any one of claims 1 to 12;
a casing (200) having one open side with an opening portion and configured to accommodate the electrode assembly (100); and
a cap assembly (300) coupled to the open opening portion of the casing (200).

14. A battery pack (3) comprising the secondary battery (1)according to claim 13.

15. A transport means (V) comprising the battery pack (3) according to claim 14.

## Patentansprüche

1. Elektrodenanordnung (100), die durch Wickeln einer positiven Elektrode (20), eines Separators (40) und einer negativen Elektrode (10) hergestellt ist, wobei die negative Elektrode (10) umfasst:
einen Negativelektroden-Aktivmaterialabschnitt (11); und einen Negativelektroden-Nichtbeschichtungsabschnitt (12),
wobei der Negativelektroden-Aktivmaterialabschnitt (11) durch Aufbringen eines Negativelektroden-Aktivmaterials auf einen Negativelektroden-Stromabnehmer hergestellt ist; und
wobei der Negativelektroden-Nichtbeschichtungsabschnitt (12) einen zentralen Negativelektroden-Nichtbeschichtungsabschnitt (12a), der an einem Wickelmittelabschnitt positioniert ist und kein Negativelektroden-Aktivmaterial aufweist, und einen äußersten peripheren Negativelektroden-Nichtbeschichtungsabschnitt (12b), der an einem äußersten Wickelumfang positioniert ist, umfasst,
wobei eine variable Einheit (30) an dem äußersten peripheren Negativelektroden-Nichtbeschichtungsabschnitt (12) bereitgestellt ist und konfiguriert ist, um eine Länge oder Breite davon einzustellen, und
wobei die variable Einheit (30) umfasst:
einen oder mehrere Ausschnittabschnitte (31), die eine nicht gerade Form aufweisen; und
einen variablen Abschnitt (32), der konfiguriert ist, um eine Länge oder Breite davon einzustellen.

2. Elektrodenanordnung (100) nach Anspruch 1, wobei der Ausschnittabschnitt (31) in der Form einer Schnittlinie oder einer Schnittrille bereitgestellt ist.

3. Elektrodenanordnung (100) nach Anspruch 2, wobei die Schnittlinie eine unterbrochene Linie oder eine Schnittlinie umfasst.

4. Elektrodenanordnung (100) nach Anspruch 1, wobei die nicht gerade Form eine Zickzackform oder eine Wellenform aufweist.

5. Elektrodenanordnung (100) nach Anspruch 1, wobei der Ausschnittabschnitt (31) in einer oder beiden der Längen- und Breitenrichtungen des Negativelektroden-Nichtbeschichtungsabschnitts (12) bereitgestellt ist.

6. Elektrodenanordnung (100) nach Anspruch 1, wobei die Negativelektroden-Nichtbeschichtungsabschnitte (12) an vorderen und hinteren Enden basierend auf einer Längsrichtung der variablen Einheit (30) positioniert sind und die Elektrodenanordnung (100) ferner einen oder mehrere fixierte Abschnitte (33) umfasst, die an einer Grenzlinie zwischen der variablen Einheit (30) und dem Negativelektroden-Nichtbeschichtungsabschnitt (12) fixiert sind.

7. Elektrodenanordnung (100) nach Anspruch 1, wobei der variable Abschnitt (32) das gleiche Material wie der Negativelektroden-Stromabnehmer umfasst.

8. Elektrodenanordnung (100) nach Anspruch 1, wobei der äußerste periphere Negativelektroden-Nichtbeschichtungsabschnitt (12) einen Negativelektroden-Nichtbeschichtungsabschnitt (12b') und einen zweiten Negativelektroden-Nichtbeschichtungsabschnitt (12b") umfasst und die variable Einheit zwischen dem ersten Negativelektroden-Nichtbeschichtungsabschnitt (12b') und dem zweiten Negativelektroden-Nichtbeschichtungsabschnitt (12b") positioniert ist.

9. Elektrodenanordnung (100) nach Anspruch 1, wobei eine Oberfläche oder zwei gegenüberliegende Oberflächen des variablen Abschnitts (32) mit einem elektrisch leitfähigen Material beschichtet sind.

10. Elektrodenanordnung (100) nach Anspruch 1, wobei der Ausschnittabschnitt (31) als einer oder zwei oder mehr Ausschnittabschnitte (31) bereitgestellt ist.

11. Elektrodenanordnung (100) nach Anspruch 10, wobei die zwei oder mehr Ausschnittabschnitte (31) bereitgestellt sind und mindestens zwei Ausschnittabschnitte (31) in der gleichen Richtung bereitgestellt sind.

12. Elektrodenanordnung (100) nach Anspruch 10, wobei die zwei oder mehr Ausschnittabschnitte (31) bereitgestellt sind und alle Ausschnittabschnitte (31) in unterschiedlichen Richtungen bereitgestellt sind.

13. Sekundärbatterie (1), umfassend:
die Elektrodenanordnung (100) nach einem der Ansprüche 1 bis 12;
ein Gehäuse (200), das eine offene Seite mit einem Öffnungsabschnitt aufweist und konfiguriert ist, um die Elektrodenanordnung (100) aufzunehmen; und
eine Kappenanordnung (300), die mit dem offenen Öffnungsabschnitt des Gehäuses (200) gekoppelt ist.

14. Batteriepack (3), umfassend die Sekundärbatterie (1) nach Anspruch 13.

15. Transportmittel (V), umfassend das Batteriepack (3) nach Anspruch 14.

## Revendications

1. Ensemble d'électrodes (100) réalisé en enroulant une électrode positive (20), un séparateur (40), et une électrode négative (10), l'électrode négative (10) comprenant :
une partie de matière active d'électrode négative (11) ; et
une partie non revêtue (12) de l'électrode négative,
la partie de matière active d'électrode négative (11) réalisée en appliquant une matière active d'électrode négative sur un collecteur de courant d'électrode négative ; et
la partie non revêtue (12) de l'électrode négative comprenant une partie non revêtue centrale (12a) de l'électrode négative positionnée sur une partie de centre d'enroulement, et dénuée de matière active d'électrode négative, et une partie non revêtue périphérique extérieure (12b) de l'électrode négative positionnée sur un pourtour d'enroulement extérieur,
une unité variable (30) étant pratiquée sur la partie non revêtue périphérique extérieure (12) de l'électrode négative et configurée pour ajuster une longueur ou une largeur de celle-ci, et
l'unité variable (30) comprenant :
une ou plusieurs parties évidées (31) ayant une forme non rectiligne ; et
une partie variable (32) configurée pour ajuster une longueur ou une largeur de celle-ci.

2. Ensemble d'électrodes (100) selon la revendication 1, la partie évidée (31) étant agencée sous forme d'une ligne coupée ou d'une rainure coupée.

3. Ensemble d'électrodes (100) selon la revendication 2, la ligne coupée comprenant une ligne discontinue ou une ligne coupée.

4. Ensemble d'électrodes (100) selon la revendication 1, la forme non rectiligne se présentant comme une forme en zigzag ou une forme ondulée.

5. Ensemble d'électrodes (100) selon la revendication 1, la partie évidée (31) étant agencée dans un du sens de la longueur ou de la largeur, ou les deux, de la partie non revêtue (12) de l'électrode négative.

6. Ensemble d'électrodes (100) selon la revendication 1, les parties non revêtues (12) de l'électrode négative étant positionnées sur des extrémités antérieures ou postérieures d'après le sens de la longueur de l'unité variable (30), et l'ensemble d'électrodes (100) comprenant en outre une ou plusieurs parties fixes (33) fixées sur une ligne de démarcation entre l'unité variable (30) et la partie non revêtue (12) de l'électrode négative.

7. Ensemble d'électrodes (100) selon la revendication 1, la partie variable (32) comprenant la même matière que le collecteur de courant de l'électrode négative.

8. Ensemble d'électrodes (100) selon la revendication 1, la partie non revêtue périphérique extérieure (12) de l'électrode négative comprenant une partie non revêtue d'électrode négative (12b') et une deuxième partie non revêtue d'électrode négative (12b"), et l'unité variable étant positionnée entre la première partie non revêtue d'électrode négative (12b') et la deuxième partie non revêtue d'électrode négative (12b").

9. Ensemble d'électrodes (100) selon la revendication 1, une surface ou deux surfaces opposées de la partie variable (32) étant revêtues d'une matière électro-conductrice.

10. Ensemble d'électrodes (100) selon la revendication 1, la partie évidée (31) étant agencée sous forme d'une ou de deux parties évidées (31) ou davantage.

11. Ensemble d'électrodes (100) selon la revendication 10, les deux ou plusieurs parties évidées (31) étant prévues, et au moins deux parties évidées (31) étant agencées dans la même direction.

12. Ensemble d'électrodes (100) selon la revendication 10, les deux ou plusieurs parties évidées (31) étant prévues, et toutes les parties évidées (31) étant agencées dans différentes directions.

13. Batterie secondaire (1) comprenant :
l'ensemble d'électrodes (100) selon une quelconque des revendications 1 à 12 ;
un boîtier (200) possédant un côté ouvert avec une partie ouvrante, et configuré pour y loger l'ensemble d'électrodes (100) ; et
un ensemble de couvercle (300) couplé à la partie ouvrante ouverte du boîtier (200).

14. Bloc-batterie (3) comprenant la batterie secondaire (1) selon la revendication 13.

15. Véhicule de transport (V) comprenant le bloc-batterie (3) selon la revendication 14.
